# EUROPEAN PATENT APPLICATION

(11) **EP 3 787 254 A1**
(43) Date of publication of application: **03.03.2021**
(21) Application number: 20193149.0
(22) Date of filing: 27.08.2020
(51) Int. Cl.: H04L 29/06, H04L 9/08, H04W 4/70, H04W 4/80, H04W 12/04, H04W 12/06

(54) **METHODS AND APPARATUS FOR END-TO-END SECURE COMMUNICATIONS**

(30) Priority: 30.08.2019 US 201916557618
(71) Applicant: u-blox AG, 8800 Thalwil (CH)
(72) Inventor: VIGNESWARAN, Hariharasudhan, 211 75 Malmö (SE); BERGKVIST, Pelle, 211 75 Malmö (SE); ULLEN, Vilhelm, 211 75 Malmö (SE)
(74) Representative: Elkington and Fife LLP

(57) **Abstract**

Methods and apparatus for secure communication between first and second devices over a network, the method comprising transmitting a security message from the first device to the second device through a serial data stream using packet fragmentation; configuring a secure connection between the first and second devices over the network, the secure connection being based on the security message; and communicating data via the secure connection by at least one of transmitting data from the first device to the second device, or receiving data by the first device from the second device.

## Description

### TECHNICAL FIELD

The present disclosure relates to end-to-end secure communications, and more particularly, to methods and apparatus for end-to-end secure communications based on a security protocol over a constrained network.

### BACKGROUND

In a wireless Internet of Things (loT) network, an end node usually transmits data to a gateway through a non-Internet-Protocol-based (non-IP-based) wireless communication. After the gateway receives the data from the end node, the gateway transmits the data to a cloud server through an Internet-Protocol-based (IP-based) communication. The data transmissions are typically secured between the end node and the gateway and between the gateway and the cloud server.

However, when the gateway processes the data, the gateway may not protect the data from interception. For example, when the gateway is in a public environment, the gateway may be at high risk of interception or hacking. The gateway may therefore not be trusted. The data received from the end node may be manipulated and therefore not be secured. Moreover, the data may be duplicated or redirected for unintended or unauthorized purposes.

It is therefore desirable to provide methods and apparatus for end-to-end secure communication between devices over a constrained network.

### SUMMARY

Embodiments of the disclosure provide methods and apparatus for end-to-end secure communications based on a security protocol over a constrained network, which improve end-to-end security between an loT node and a cloud server, between two loT nodes, and between a user device and an loT node.

These embodiments include a method for secure communication between first and second devices over a network. The method comprises transmitting a security message from the first device to the second device through a serial data stream using packet fragmentation; configuring a secure connection between the first and second devices over the network, the secure connection being based on the security message; and communicating data via the secure connection by at least one of transmitting data from the first device to the second device; or receiving data by the first device from the second device.

These embodiments also include an end device for secure communication with a remote device over a network. The end device comprises at least one memory for storing instructions and at least one controller configured to execute the instructions to perform operations. The operations comprise transmitting a security message to the remote device through a serial data stream using packet fragmentation; configuring a secure connection with the remote device over the network, the secure connection being based on the security message; and communicating data via the secure connection by at least one of transmitting data to the remote device, or receiving data from the remote device.

These embodiments further include a non-transitory computer-readable medium for storing instructions which, when executed, cause a controller to perform operations for secure communication between first and second devices over a network. The operations comprise transmitting a security message from the first device to the second device through a serial data stream using packet fragmentation; configuring a secure connection between the first and second devices over the network, the secure communication being based on the security message; and communicating data via the secure connection by at least one of transmitting data from the first device to the second device, or receiving data by the first device from the second device.

### BRIEF DESCRIPTION OF THE DRAWINGS

**Fig. 1** is a schematic diagram of an exemplary wireless loT network, consistent with embodiments of the present disclosure.
**Fig. 2** is a schematic diagram of another exemplary scenario of a wireless loT network, consistent with embodiments of the present disclosure.
**Fig. 3** is a block diagram of an exemplary end device for end-to-end secure communications over a constrained network, consistent with embodiments of the present disclosure.
**Fig. 4** is a block diagram of an exemplary server for end-to-end secure communications over a constrained network, consistent with embodiments of the present disclosure.
**Fig. 5** illustrates an exemplary communication method for end-to-end secure communications over a constrained network, consistent with embodiments of the present disclosure.
**Fig. 6** illustrates exemplary protocol stacks for end-to-end secure communications over a constrained network, consistent with embodiments of the present disclosure.
**Fig. 7** illustrates another exemplary communication method for end-to-end secure communications over a constrained network, consistent with embodiments of the present disclosure.
**Fig. 8** is a flow chart of an exemplary method performed in an end device to provide end-to-end secure communications over a constrained network, consistent with embodiments of the present disclosure.
**Fig. 9** is a flow chart of another exemplary method performed in a device on a network to provide end-to-end secure communications, consistent with embodiments of the present disclosure.
**Fig. 10** is a flow chart of an exemplary method performed in an end device to initiate end-to-end secure communications over a constrained network, consistent with embodiments of the present disclosure.
**Fig. 11** is a flow chart of an exemplary method performed in an end device to receive a request for end-to-end secure communications over a constrained network, consistent with embodiments of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

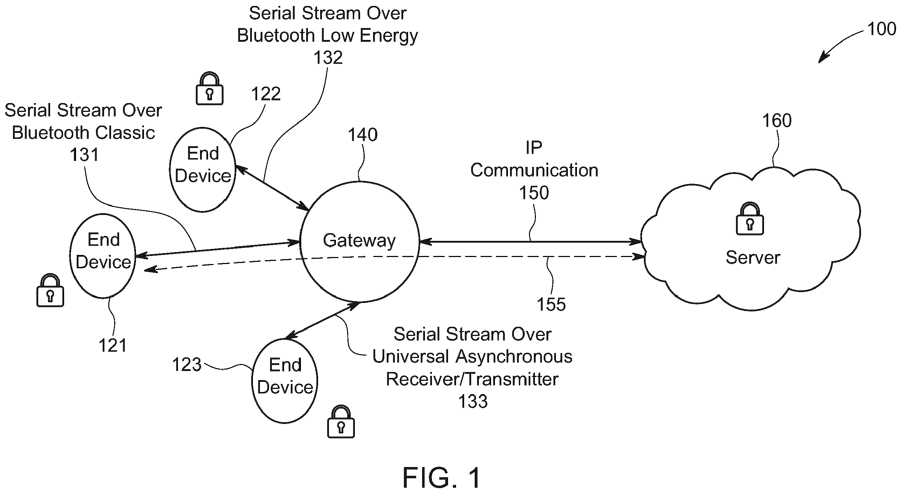

**Fig. 1** is a schematic diagram of an exemplary wireless loT network 100, consistent with embodiments of the present disclosure. Wireless loT network 100 includes three end devices 121, 122, and 123, a gateway 140, and a server 160. End device 121 connects with gateway 140 over a serial stream 131 using, for example, a Bluetooth Classic communication protocol. End device 122 connects with gateway 140 over a serial stream 132 by using, for example, a Bluetooth Low Energy communication protocol. End device 123 connects with gateway 140 over a serial stream 133 by using, for example, a Universal Asynchronous Receiver/Transmitter (UART) communication protocol. Gateway 140 connects with server 160 via an Internet Protocol (IP) communication 150.

End device 121, 122, or 123 may be a sensor device, such as a thermal sensor, a temperature sensor, an image sensor, a pressure sensor, a humidity sensor, an accelerometer, an object sensor, and a movement sensor, supporting communications over a constrained network. Alternatively, end device 121, 122, or 123 may be another type of device, such as a camera, a handset, a laptop, a computer, or a display device, supporting communications over a constrained network.

Gateway 140 may be an loT gateway that supports IP communications and one or more of Bluetooth Low Energy, Bluetooth Classic, Zigbee, and Universal Asynchronous Receiver/Transmitter communication protocols. For example, as shown in **Fig. 1****,** gateway 140 connects with end devices 121, 122, and 123 through serial streams 131, 132, and 133 by using the Bluetooth Classic, Bluetooth Low Energy, and UART communication protocols, respectively.

Server 160 may be a cloud server that provides support for loT applications, environmental data collection, or data sharing between end devices. As shown in **Fig. 1****,** server 160 connects with gateway 140 via IP communication 150. Alternatively, server 160 can be a server apparatus executing various applications and connected with gateway 140 over the Internet.

As shown in **Fig. 1****,** end device 121 and server 160 establish a security protocol connection 155 between each other through gateway 140 over serial stream 131 and IP communication 150 in wireless loT network 100. Security protocol connection 155 is a connection of a security protocol between two end nodes or between an end node and a server. For example, security protocol connection 155 can be a connection of a security protocol at a transport layer, such as a Secure Sockets Layer (SSL) protocol, a transport layer security (TLS) protocol, and a datagram TLS (DTLS) protocol. As another example, security protocol connection 155 may be a connection of a security protocol of an application layer, such as a Secure/Multi-purpose Internet Mail Extensions (S/MIME) protocol, an Open Pretty Good Privacy (OpenPGP) protocol, or a Secure HyperText Transfer Protocol (S/HTTP). Security protocol connection 155 can also be a connection of a security protocol across transport and application layers.

As shown in **Fig. 1****,** wireless loT network 100 includes a plurality of network nodes, such as end devices 121, 122, and 123, gateway 140, and server 160. One or more of these network nodes can be a "constrained" node. A constrained node is a node where some of the characteristics that are common in many Internet nodes are not attainable, due to constraints on cost or physical characteristics such as size, weight, and available power and energy. The tight constraints on power, memory, and processing resources lead to hard upper bounds on state, code space, and processing cycles, making optimization of energy and network bandwidth usage a dominating consideration in all design requirements. Also, in a constrained node, some layer-2 services such as full connectivity and broadcast/multicast may be lacking.

For example, end device 121 can be a smart meter that measures humidity at a location in a smart city. The smart meter is constrained on size and weight for installation convenience in the city. Because the smart meter is usually powered by a battery, the smart meter is also constrained on available power and energy to measure humidity and report measurement results to a central server of the smart city.

Moreover, the smart meter may only need to measure the humidity and report a measurement result, periodically, such as once per hour. Since the smart meter only needs to measure humidity with a low duty cycle, the smart meter contains a controller having processing capability sufficient only to control a humidity sensor and a transmitter for a measurement report. The smart meter can also be equipped with a minimal amount of memory, sufficient only to store codes for noncomplicated controls of humidity measure and report. End device 121 is therefore a constrained node due to one or more of the above-discussed constraints.

End devices 122 and 123 can also be constrained nodes due to one or more of the above-discussed constraints.

Wireless loT network 100 is a constrained network. A constrained network is a network where some of the characteristics commonly exhibited in an IP link are not attainable. For example, wireless loT network 100 may include a link constrained in at least one of a bitrate, a duty cycle, a delivery rate, an asymmetric link characteristic, a packet size, reachability over time, or a network service.

The link in wireless loT network 100 may be constrained by a low achievable bit rate or throughput. For example, the link between end device 121 and gateway 140 may be constrained to 200 kilobits per second (Kbps) because of limitations of the Bluetooth Classic communication protocol and limited capacity of a battery of end device 121. A rate, or throughput, of 200 Kbps in wireless loT network 100 is a low rate, as compared to other links in wireless loT network 100 that support, for example, one hundred megabits per second (Mbps) or one gigabit per second (Gbps).

Alternatively, the link in wireless loT network 100 may be constrained by a low duty cycle. For example, the link between end device 121 and gateway 140 may be constrained to transmit data only once per hour because of limited battery capacity in end device 121. A duty cycle of one transmission per hour in wireless loT network 100 is a low duty cycle, as compared to other links in wireless loT network 100 that support, for example, a duty cycle of 20 % or 50 % for data transmission.

In some embodiments, the link in wireless loT network 100 may be constrained by a low delivery rate. For example, the link between end device 121 and gateway 140 may be constrained to 10 % successful packet transmission rate because end device 121 is installed in an out-of-the-way location, such that gateway 140 receives a transmitted signal from end device 121 with a low signal-to-noise ratio (SNR), causing a low successful packet transmission rate. A 10 % successful transmission rate in wireless loT network 100 is low, as compared to other links in wireless loT network 100 that support, for example, a successful transmission rate of 70 % or 80 % for data transmission. A successful packet transmission rate of 10 % is equivalent to a packet loss rate of 90 %.

The link in wireless loT network 100 may be constrained by an asymmetric link characteristic. For example, the link between end device 121 and gateway 140 may be constrained to transmit many more messages from end device 121 to server 160 than in the opposite direction. The link of transmissions mainly in one direction in wireless loT network 100 is an asymmetric link, as compared to other links in wireless loT network 100 in which devices communicate with each other by similar amounts of data.

Alternatively, the link in wireless loT network 100 may be constrained by packet size. For example, the link between end device 121 and gateway 140 may be constrained to transmit a packet of a maximum size of one kilobit (Kb), since a packet of more than one Kb results in a high packet loss. The link handling a packet size of only 1 Kb in wireless loT network 100 is thus constrained on the packet size, as compared to other links in wireless loT network 100 that may support, for example, a data transmission packet size of 4 megabytes (MBs).

The link in wireless loT network 100 may also be constrained by reachability over time. For example, the link between end device 121 and gateway 140 may be constrained to communicate for only a short period of time in an hour because end device 121 is a battery-powered device and enters a sleep mode after transmitting all measurement results. End device 121 therefore cannot be reached until end device 121 "wakes up" in the next hour. A link with limited time to reach end device 121 in wireless loT network 100 is thus constrained on reachability over time, as compared to other links in wireless loT network 100 in which devices are constantly reachable over time.

Alternatively, the link in wireless loT network 100 may be constrained by limitations on available network services. For example, the link between end device 121 and gateway 140 may not support an IP multi-cast service, since end device 121 is configured with a limited amount codes to perform only a unicast service to server 160. A link of limited network services in wireless loT network 100 is thus constrained on the network service, as compared to other links in wireless loT network 100 that may support, for example, all unicast, multicast, and broadcast services.

Other links between end devices 122 and 123 and other network nodes in wireless loT network 100 may also be constrained by one or more of the above-discussed characteristics.

In some embodiments, wireless loT network 100 is a constrained network because the network includes a constrained node, such as end device 121. Since end device 121 may be limited by size, weight, and available power and energy to perform transmission, a link between end device 121 is thus constrained on a bitrate, a duty cycle, a delivery rate, an asymmetric link characteristic, a packet size, reachability over time, or a network service. Thus, wireless loT network 100 is the constrained network.

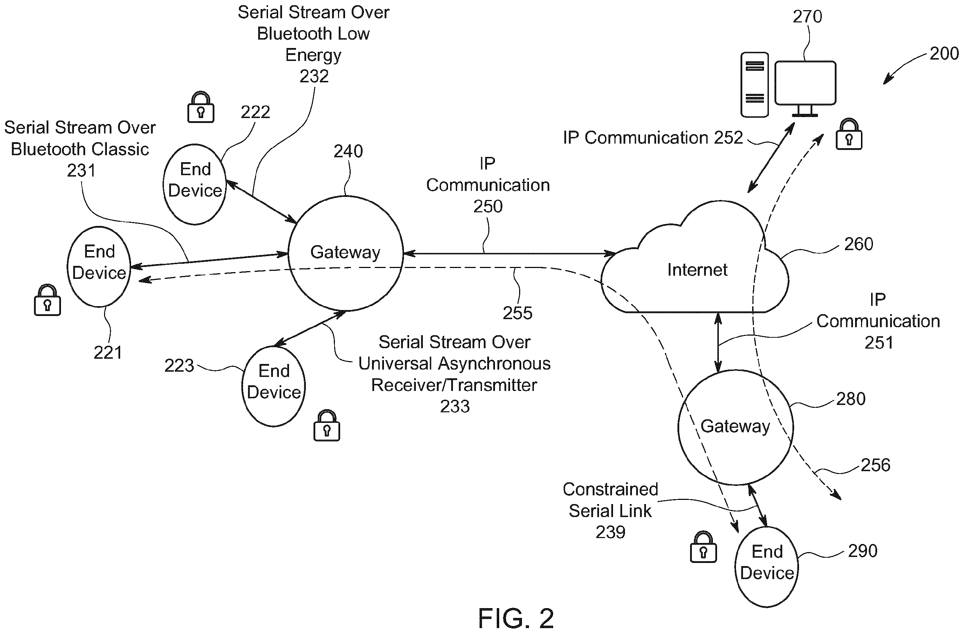

**Fig. 2** is a schematic diagram of another exemplary scenario of a wireless loT network 200, consistent with embodiments of the present disclosure. Wireless loT network 200 includes five end devices 221, 222, 223, 270, and 290, two gateways 240 and 280, and an Internet 260. End device 221 connects with gateway 240 over a serial stream 231 by using a Bluetooth Classic communication protocol. End device 222 connects with gateway 240 over a serial stream 232 by using a Bluetooth Low Energy communication protocol. End device 223 connects with gateway 240 over a serial stream 233 by using a UART communication protocol. End device 270 connects with Internet 260 over an IP communication 252. End device 290 connects with gateway 280 over a constrained serial link 239. Gateway 240 connects with Internet 260 via an IP communication 250. Gateway 280 connects with Internet 260 via an IP communication 251.

End devices 221, 222, 223, 270, and 290 may be sensor devices, such as a thermal sensor, a temperature sensor, an image sensor, a pressure sensor, a humidity sensor, an accelerometer, an object sensor, a movement sensor, a camera, a handset, a laptop, a computer, or a display device, supporting communications over a constrained network.

Gateway 240 or 280 may be an loT gateway that supports one or more communication protocols, such as Bluetooth Low Energy, Bluetooth Classic, Zigbee, and Universal Asynchronous Receiver/Transmitter. For example, as shown in **Fig. 2****,** gateway 240 connects with end devices 221, 222, and 223 through serial streams 231, 232, and 233 by using the Bluetooth Classic, Bluetooth Low Energy, and UART communication protocols, respectively. Gateway 280 connects with end device 290 through constrained serial link 239 by using, for example, a Zigbee communication protocol.

As shown in **Fig. 2****,** end device 221 and end device 290 establish a security protocol connection 255 between each other through gateway 240 over serial stream 231, Internet 260 over IP communication 250 and IP communication 251, and gateway 280 over constrained serial link 239 in wireless loT network 200.

As shown in **Fig. 2****,** end device 270 and end device 290 also establish another security protocol connection 256 between each other through Internet 260 over IP communication 251 and 252, and gateway 280 over constrained serial link 239 in wireless loT network 200.

Security protocol connections 255 and 256 are connections of a security protocol between two end nodes or between an end node and a server. For example, security protocol connections 255 and 256 can be a connection of a security protocol at a transport layer, such as a Secure Sockets Layer (SSL) protocol, a transport layer security (TLS) protocol, and a datagram TLS (DTLS) protocol. Alternatively, security protocol connections 255 and 256 can be a connection of a security protocol at an application layer, such as a Secure/Multi-purpose Internet Mail Extensions (S/MIME) protocol, an Open Pretty Good Privacy (OpenPGP) protocol, and a Secure HyperText Transfer Protocol (S/HTTP). Security protocol connections 255 and 256 can also be a connection of a security protocol across transport and application layers.

Wireless loT network 200 is a constrained network. For example, wireless loT network 200 includes a link constrained by at least one of a bitrate, a duty cycle, a delivery rate, an asymmetric link characteristic, a packet size, reachability over time, or a network service, as described above in **Fig. 1** for the link between end device 121 and gateway 140 in wireless loT network 100. The link between end device 221 and gateway 240 can be constrained in a manner similar to the link in **Fig. 1** between end device 121 and gateway 140. Alternatively, the link between end device 290 and gateway 280 can be constrained in a manner similar to the link in **Fig. 1** between end device 121 and gateway 140.

Links between end devices 222 and 223 and other network nodes in wireless loT network 200 may also be constrained by one or more of the above-described characteristics.

In some embodiments, wireless loT network 200 is a constrained network because the network includes a constrained node, such as end device 221. For example, end device 221 may be limited in size, weight, and available power and energy to perform transmission, such that a link between end device 221 is constrained by a bitrate, a duty cycle, a delivery rate, an asymmetric link characteristic, a packet size, reachability over time, or a network service. Thus, wireless loT network 200 is a constrained network.

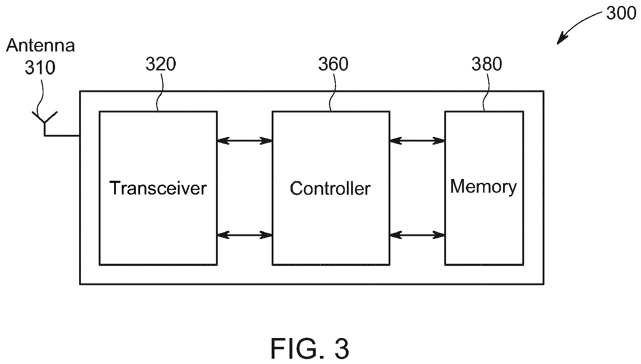

**Fig. 3** is a block diagram of an exemplary end device 300 for end-to-end secure communications over a constrained network, consistent with embodiments of the present disclosure. End device 300 may be embodied as device 121, 122, or 123 shown in **Fig. 1****,** or 221, 222, 223, 270, or 290 shown in **Fig. 2****.** End device 300 includes an antenna 310, a transceiver 320, a controller 360, and a memory 380. One or more of these elements of end device 300 may be included for secure communication with a remote device over a constrained network. These elements may be configured to transfer data and send or receive instructions and signals between or among each other.

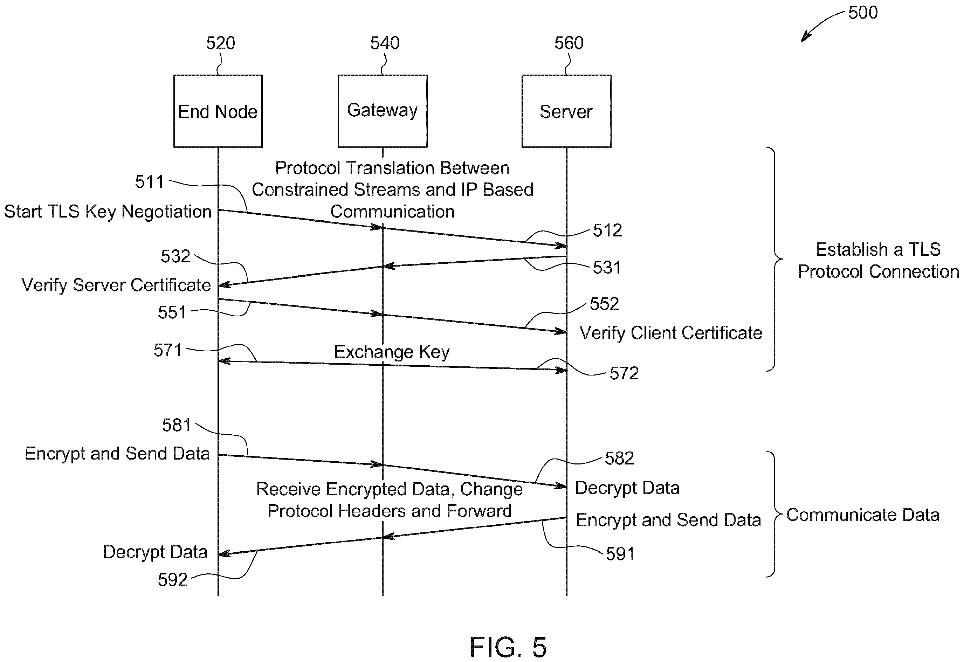

Transceiver 320 may include a transmitter and/or a receiver to transmit and/or receive control signals and data of end device 300 via an antenna 310. Transceiver 320 may include one or more communication transceivers, including, for example, a Bluetooth Low Energy modem and radio frequency circuits, a Bluetooth Classic modem and radio frequency circuits, a Zigbee modem and radio frequency circuits, a UART transceiver, a fifth-generation radio access modem and radio frequency circuits, a Long-Term Evolution (LTE) modem and radio frequency circuits, a narrow band Internet of things (NB-loT) and radio frequency circuits, a High Speed Packet Access (HSPA) modem and radio frequency circuits, a Wideband Code-Division Multiple Access (WCDMA) modem and radio frequency circuits, and/or a Global System for Mobile communication (GSM) modem and radio frequency circuits. Transceiver 320 may further include control circuits that control its components to transmit and receive messages and data, as illustrated in **Figs. 1** and **2** described above, and in **Figs. 5-11** described below, thus providing secure communication with a remote device over a constrained network.

Controller 360 includes any appropriate type of general-purpose or special-purpose microprocessor, digital signal processor, or microcontroller. Controller 360 can be representative of one or more processors or controller in end device 121, 122, 123, 221, 222, 223, 270, or 290. Controller 360 can be configured by one or more programs stored in memory 380 to perform operations of end device 300 with respect to the methods and apparatus illustrated in **Figs. 1** and **2** and described below in **Figs. 5-11****.**

Memory 380 may include any appropriate type of mass storage provided to store any type of information that controller 360 may need to operate. Memory 380 may be a volatile or non-volatile, magnetic, semiconductor, tape, optical, removable, non-removable, or other type of storage device or tangible (i.e., non-transitory) computer-readable medium including, but not limited to, a read-only memory (ROM), a flash memory, a dynamic random-access memory (RAM), and a static RAM. Memory 380 may be configured to store one or more programs for execution by controller 360 for secure communication with a remote device over a constrained network, as disclosed herein. Memory 380 may be further configured to store information and data used by controller 360. For instance, memory 380 may be configured to store received security messages, keys, certificates, and data therein for end device 300.

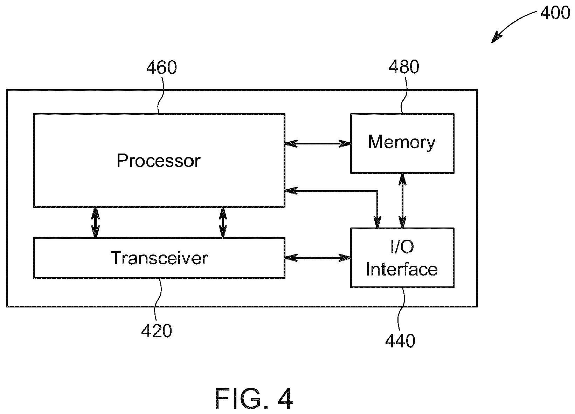

**Fig. 4** is a block diagram of an exemplary server 400 for end-to-end secure communications over a constrained network, consistent with embodiments of the present disclosure. Server 400 may, for example, be embodied as server 160 shown in **Fig.1****.** Server 400 includes a transceiver 420, an input/output (I/O) interface 440, a processor 460, and a memory 480. One or more of these elements of end device 400 may be included for secure communication with a remote device over a network. These elements may be configured to transfer data and send or receive instructions and signals between or among each other.

Transceiver 420 may include a transmitter and/or a receiver to transmit and/or receive control signals and data of server 400. Transceiver 420 may include one or more communication transceivers, including, for example, a Ethernet modem, a wireless local area network (WLAN) modem and radio frequency circuits, a digital subscriber line (DSL) modem, a fibre optic modem, a fifth-generation radio access modem and radio frequency circuits, a Long-Term Evolution (LTE) modem and radio frequency circuits, a High Speed Packet Access (HSPA) modem and radio frequency circuits, a Wideband Code-Division Multiple Access (WCDMA) modem and radio frequency circuits, and/or a Global System for Mobile communication (GSM) modem and radio frequency circuits. In some embodiments, transceiver 420 may include one or more communication transceivers, such as a Bluetooth Low Energy modem and radio frequency circuits, a Bluetooth Classic modem and radio frequency circuits, a Zigbee modem and radio frequency circuits, or a UART transceiver.

Transceiver 420 may further include control circuits that control its components to transmit and receive messages and data, as illustrated in **Fig. 1** and described below in **Figs. 5****,** **6****,** and 9. In some embodiments, processor 460 may control transceiver 420 for secure communication with a remote device over a network, as illustrated in **Fig. 1** and described below in **Figs. 5****,** **6****,** and **9****.**

Processor 460 includes any appropriate type of general-purpose or special-purpose microprocessor, digital signal processor, or microcontroller. Processor 460 can be representative of one or more processors in server 160. Processor 460 can be configured by one or more programs stored in memory 480 to perform operations of server 400 described with respect to the methods, circuits, and apparatus illustrated in **Fig. 1** and described below in **Figs. 5****,** **6****,** and **9****.**

Memory 480 may include any appropriate type of mass storage provided to store any type of information that processor 460 may need in order to operate. Memory 480 may be a volatile or non-volatile, magnetic, semiconductor, tape, optical, removable, non-removable, or other type of storage device or tangible (i.e., non-transitory) computer-readable medium including, but not limited to, a read-only memory (ROM), a flash memory, a dynamic random-access memory (RAM), and a static RAM. Memory 480 may be configured to store one or more programs for execution by processor 460 for secure communication with a remote device over a network, as disclosed herein. Memory 480 may be further configured to store information and data used by processor 460. For instance, memory 480 may be configured to store received security messages, keys, certificates, and data therein for server 400.

**Fig. 5** illustrates an exemplary communication method 500 for end-to-end secure communications over a constrained network, consistent with embodiments of the present disclosure. In **Fig. 5****,** a constrained network includes an end node 520, a gateway 540, and a server 560. End device 520 connects with gateway 540 through a serial data stream using packet fragmentation over a constrained link. Gateway 540 connects with server 560 through an IP link. End device 520 is configured to establish end-to-end secure communication with server 560 through gateway 540 in the constrained network.

End device 520 may be embodied as end device 121, 122, or 123 shown in **Fig. 1****.** Server 560 may be embodied as server 160 shown in **Fig. 1****.** Gateway 540 may be embodied as gateway 140 shown in **Fig. 1****.** The serial data stream using packet fragmentation over the constrained link between end device 520 and gateway 540 may be embodied as serial stream 131, 132, or 133 illustrated in **Fig. 1****.** The IP link between gateway 540 and server 560 may be embodied as IP communication 150 described in **Fig. 1****.** The end-to-end secure communication between end device 520 and server 560 in **Fig. 5** may be embodied as security protocol connection 155 illustrated in **Fig. 1****.** In some embodiments, the end-to-end secure communication between end device 520 and server 560 in **Fig. 5** can also be embodied as a security protocol connection between end device 122 or 123 and server 160 through gateway 140 illustrated in **Fig. 1****.**

As shown in **Fig. 5****,** end device 520 is configured to establish the end-to-end secure communication with server 560 through gateway 540 in two phases. In the first phase, end device 520 is configured to establish, for example, a TLS protocol connection with server 560 through gateway 540. In the second phase, end device 520 is configured to communicate data with server 560 via the TLS protocol connection.

In the first phase of method 500, end device 520 is configured to start key negotiation for the TLS protocol connection with server 560 by sending a security request message to server 560. As shown in **Fig. 5****,** end device 520 is configured to send a security request 511 to gateway 540 through the serial data stream over the constrained link between end device 520 and gateway 540. After gateway 540 receives security request 511, gateway 540 is configured to translate security request 511 in a format of the serial data stream to a security request 512 in a format of the IP link between gateway 540 and server 560. After a translation, gateway 540 is configured to send security request 512 to server 560. A gateway is configured to translate a first message in a first link to a second message in a second link by forwarding the first message to the second link in the form of a modification of the second message, the modification including certain formality changes to accommodate differences in packet formalities or protocols between the first and second links. However, translation by the gateway does not result in any change to the content of the first message.

When server 560 receives security request 512 and server 560 is available to establish a security protocol connection, server 560 is configured to send a security response message to end device 520. As shown in **Fig. 5****,** server 560 is configured to send a security response 531 to gateway 540 through the IP link between gateway 540 and server 560. After gateway 540 receives security response 531, gateway 540 is configured to translate security response 531 from a format of the IP link to a security response 532 in a format of the serial data stream. Gateway 540 is configured to send security response 532 to end device 520 through the serial data stream over the constrained link between end device 520 and gateway 540.

End device 520 and gateway 540 are configured to model the constrained link between each other to be a serial data stream. When end device 520 and gateway 540 communicate a security message, such as security request 511 or security response 532, end device 520 and gateway 540 are configured to send the security message in one or more packets in accordance with a communication protocol, such as a Bluetooth Classic communication protocol, a Bluetooth Low Energy communication protocol, or a UART communication protocol illustrated in **Fig. 1****.**

A packet of one of these communication protocols can carry only a maximum amount of data, i.e., a maximum transmission unit (MTU). For example, a packet of the Bluetooth Low Energy communication protocol may have a default packet size of 23 bytes. When a security message is greater than 23 bytes, end device 520 and gateway 540 are configured to fragment the security message into multiple packets of the Bluetooth Low Energy communication protocol and serially send these packets to gateway 540 and end device 520. Gateway 540 and end device 520 are configured to defragment these packets to obtain the security message. Gateway 540 and end device 520 may also be configured to perform flow control over the serial data stream to ensure that the security message, i.e., a message of a higher layer, is sent and received correctly. In this manner, end device 520 and gateway 540 communicates the security message and other security messages with each other through the serial data stream using packet fragmentation over the constrained link.

In some embodiments, the serial data stream over the constrained link between end device 520 and gateway 540 may require varied bit rates or provide varied sizes of packet data units to convey the security message of the security protocol. End device 520 and gateway 540 are configured to dynamically fragment the security message in varied sizes of packets of the Bluetooth Low Energy communication protocol and send to the other. In this manner, end device 520 and gateway 540 communicates the security message and other security messages with each other through the serial data stream using dynamic fragmentation over the constrained link.

End device 520 is installed with a trusted authentication authority that includes a list of identities of servers that end device 520 can verify and trust. End device 520 is configured to verify an identity of server 560 in accordance with the trusted authentication authority. For example, after end device 520 receives security response 532, end device 520 is configured to verify an identity of server 560 contained in security response 532 or another security message by comparing the identity of server 560 with those servers listed in the trusted authentication authority. End device 520 is configured to determine server 560 is trustable when the identity of server 560 matches one of identities of the servers in the trusted authentication authority. The identities can be serial numbers of servers, TLS certificates of servers, or reference characters designated to servers.

End device 520 can also be configured to send a client certificate message to server 560 for client authentication. As shown in **Fig. 5****,** end device 520 is configured to send a client certificate message 551 to gateway 540. Gateway 540 is configured to translate client certificate message 551 in the format of the serial data stream to a client certificate message 552 in the format of the IP link, and send client certificate message 552 to server 560. Server 560 is configured to verify end device 520 by comparing an identity of end device 520 contained in client certificate message 552 with a database of trustable end devices in server 560. Server 560 is configured to determine end device 520 is trustable when the identity of end device 520 matches one of identities of the trustable end devices. The identities of end devices can be serial numbers of end devices, TLS certificates of end devices, or reference characters designated to end devices.

When end device 520 and server 560 exchange security requests 511 and 512 and security response 531 and 532, end device 520 and server 560 may be configured to negotiate an encryption algorithm that is used for data communication in the TLS protocol connection between end device 520 and server 560. For example, end device 520 may send one or more supported encryption algorithms in security requests 511. When server 560 receives the supported encryption algorithms of end device 520 in security request message 512, server 560 is configured to select among these encryption algorithms an encryption algorithm for data communication in the TLS protocol connection. Server 560 may be configured to send the selected encryption algorithm in security response 531. When end device 520 receives security response 532, end device 520 obtains the selected encryption algorithm for the TLS protocol connection.

As shown in **Fig. 5****,** end device 520 and server 560 are also configured to exchange key information for the TLS protocol connect. End device 520 and server 560 are configured to exchange key information by a key exchange message 571 in the format of the serial data stream and a key exchange message 572 in the format of the IP link. Key exchange messages 571 and 572 may include one or more messages for key exchange between end device 520 and server 560. End device 520 may be configured to send information about private and/or public keys of end device 520 when end device 520 exchanges key information with server 560. Server 560 may also be configured to send information about private and/or public keys of server 560 when server 560 exchanges key information with end device 520.

When end device 520 obtains the key information of server 560 and the encryption algorithm for the TLS protocol connection, end device 520 is configured to calculate a session key based on the encryption information and the key information of server 560 as well as private and/or public key of end device 520. When server 560 obtains the key information of end device 520 and the encryption algorithm for the TLS protocol connection, server 560 is configured to calculate a session key based on the encryption information and the key information of end device 520 as well as private and/or public key of server 560. End device 520 and server 560 are configured to encrypt and/or decrypt data over the TLS protocol connection based on the session key calculated by themselves, respectively.

In some embodiments, one of end device 520 and server 560 may be configured to calculate a session key and send the session key to the other for data encryption and decryption over the TLS protocol connection as described above.

In the second phase of method 500, end device 520 is configured to communicate data with each other via the TLS protocol connection. For example, as shown in **Fig. 5****,** end device 520 is configured to encrypt data by the session key and send a data message 581 to gateway 540. After gateway 540 receives data message 581, gateway 540 translates data message 581 to a data message 582 in the format of the IP link and sends data message 582 to server 560. Server 560 is then configured to decrypt data message 582 by the session key and obtain data transmitted by end device 520.

As another example, as shown in **Fig. 5****,** server 560 is configured to encrypt data by the session key and send a data message 591 to gateway 540. After gateway 540 receives data message 591, gateway 540 translates data message 591 to a data message 592 in the format of the serial data stream of the constrained link and sends data message 592 to end device 520. End device 520 is then configured to decrypt data message 592 by the session key and obtain data transmitted by server 560.

End device 520 and server 560 can be configured to communicate data with each other via the established TLS protocol connection in one direction, e.g., from end device 520 to server 560 or from server 560 to end device 520, or in both two directions.

Since end device 520 and server 560 communicate data via the TLS protocol connection, data sent by one of end device 520 and server 560 can only be decrypted by the other one. Accordingly, end device 520 has secure communication with server 560, and vice versa.

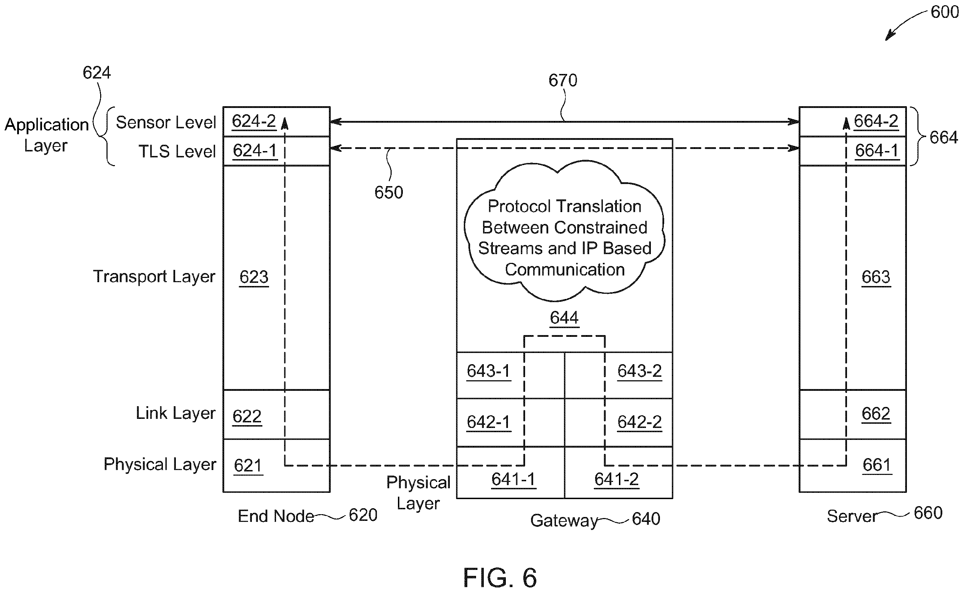

**Fig. 6** illustrates exemplary protocol stacks for end-to-end secure communications over a constrained network 600, consistent with embodiments of the present disclosure. Constrained network 600 includes an end node 620, a gateway 640, and a server 660. End device 620 is configured to establish a secure communication 670 with server 660 by a TLS protocol connection 650 through gateway 640 in constrained network 600, like method 500 described in **Fig. 5****.** End device 620 connects with gateway 640 through a serial data stream using packet fragmentation over a constrained link. Gateway 640 connects with server 660 through an IP link.

End device 620 may be embodied as end device 121, 122, or 123 shown in **Fig. 1****.** Server 660 may be embodied as server 160 shown in **Fig. 1****.** Gateway 640 may be embodied as gateway 140 shown in **Fig. 1****.** The serial data stream using packet fragmentation over a constrained link between end device 620 and gateway 640 may be embodied as serial stream 131, 132, or 133 illustrated in **Fig. 1****.** The IP link between gateway 640 and server 660 may be embodied as IP communication 150 described in **Fig. 1****.** TLS protocol connection 650 between end device 620 and server 660 in **Fig. 6** may be embodied as security protocol connection 155 illustrated in **Fig. 1****.** In some embodiments, TLS protocol connection 650 can also be embodied as a security protocol connection between end device 122 or 123 and server 160 through gateway 140 illustrated in **Fig. 1****.**

TLS protocol connection 650 is a secure communication at a transport layer between end device 620 and server 660. As shown in **Fig. 6****,** a protocol stack of end device 620 includes a physical layer 621, a link layer 622, a transport layer 623, and an application layer 624. Application layer 624 includes a TLS level 624-1 and a sensor level 624-2.

A protocol stack of server 660 includes a physical layer 661, a link layer 662, a transport layer 663, and an application layer 664. Application layer 664 includes a TLS level 664-1 and a sensor level 664-2.

A protocol stack of gateway 640 includes a physical layer 641-1 for the serial data stream and a physical layer 641-2 for the IP link, a link layer 642-1 for the serial data stream and a link layer 642-2 for the IP link, a transport layer 643-1 for the serial data stream and a transport layer 643-2 for the IP link, and a protocol translation between constrained streams and IP based communication 644.

TLS protocol connection 650 can also be recognized as a TLS tunnel between end device 620 and server 660. As shown in **Fig. 6****,** through the TLS tunnel, end device 620 and server 660 can communicate data with each other. TLS protocol connection 650 includes the serial data stream between end device 620 and gateway 640 and the IP link between gateway 640 and server 660.

End device 620 is configured to measure or collect data by sensor level 624-2 and send the data through the TLS protocol connection to server 660 by TLS level 624-1. TLS level 624-1 of end device 620 is configured to send the data by transport layer 623, link layer 622, physical layer 621 to corresponding transport layer 643-1, link layer 642-1, physical layer 641-1 of gateway 640 over the serial data stream, respectively. Protocol translation between constrained streams and IP based communication 644 of gateway 640 is configured to translate data messages of the serial data stream into data messages of the IP link.

Gateway 640 is configured to send the data by transport layer 643-2, link layer 642-2, physical layer 641-2 to corresponding transport layer 663, link layer 662, physical layer 661 of server 660 over the IP link, respectively. TLS level 664-1 of application layer 664 in server 660 obtains the data through TLS protocol connection 650 and provides the data to sensor level 664-2 of application layer 664 in server 660. Server 660 can collect and make use of the data in accordance with various applications.

When server 660 is configured to send data to end device 620, server 660 can be configured to utilize these protocol layers in a reverse direction to send the data.

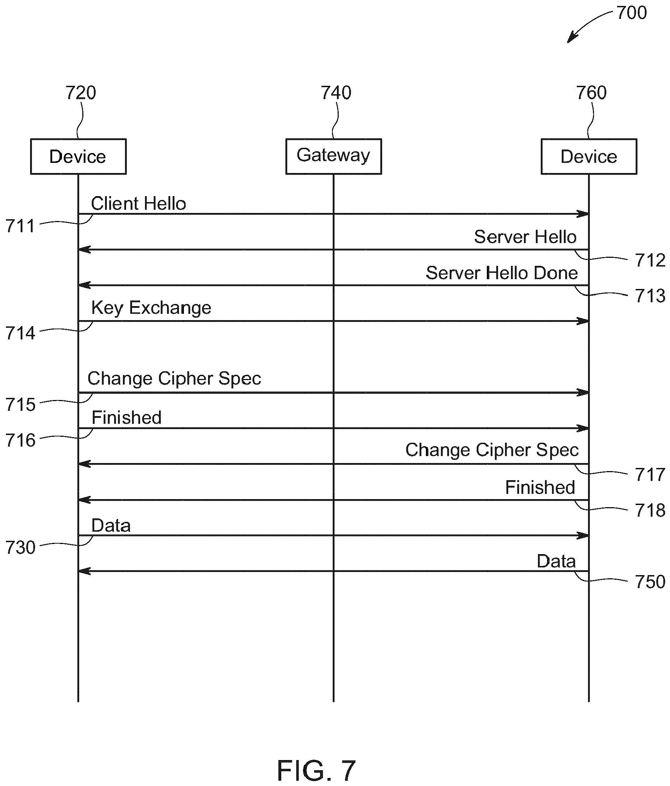

**Fig. 7** illustrates another exemplary communication method 700 for end-to-end secure communications over a constrained network, consistent with embodiments of the present disclosure. In **Fig. 7****,** a constrained network includes an end node 720, a gateway 740, and another end device 760. End device 720 connects with gateway 740 through a serial data stream using packet fragmentation over a constrained link. Gateway 740 connects with end device 760 through another serial data stream using packet fragmentation over another constrained link.

End device 720 may be embodied as end device 221, 222, or 223 shown in **Fig. 2****.** End device 760 may be embodied as end device 290 shown in **Fig. 2****.** Gateway 740 may be embodied as gateway 240 shown in **Fig. 2****.** The serial data stream using packet fragmentation over the constrained link between end device 720 and gateway 740 may be embodied as serial stream 231, 232, or 233 illustrated in **Fig. 2****.** A link between end device 760 and gateway 740 may be embodied as a combination of IP communication 250, a link in Internet 260, IP communication 251, and constrained serial link 239 described in **Fig. 2****.** The end-to-end secure communication between end device 720 and end device 760 in **Fig. 7** may be embodied as security protocol connection 255 illustrated in **Fig. 2****.**

In **Fig. 7****,** end device 720 is configured to establish the end-to-end secure communication with end device 760 through gateway 740. First, end device 720 is configured to establish, for example, a DTLS protocol connection with end device 760 through gateway 740. End device 720 is then configured to communicate data with end device 760 via the DTLS protocol connection.

As shown in **Fig. 7****,** end device 720 is configured to send a Client Hello 711 to end device 760 through gateway 740. Client Hello 711 contains cryptographic information such as a DTLS version and cipher suites supported by end device 720. A cipher suite is a set of algorithms that help secure a DTLS protocol connection. The set of algorithms may include a key exchange algorithm, a bulk encryption algorithm, and/or a message authentication code algorithm.

After end device 760 receives Client Hello 711, end device 760 is configured to choose a cipher suite among the cipher suites provided by end device 720 in Client Hello 711. End device 760 is configured to send a Server Hello 712 to end device 720 through gateway 740. Server Hello 712 contains the cipher suite chosen by end device 760 and a session identity.

When gateway 740 receives Client Hello 711 from end device 720 or Server Hello 712 from end device 760, gateway 740 is configured to translate Client Hello 711 and Server Hello 712 between a format of the serial data stream and a format of an IP link, as described in translations by gateway 540 in **Fig. 5****.** Gateway 740 is also configured to translate other messages between end device 720 and end device 760 in **Fig. 7****.**

End device 720 and gateway 740 are configured to model the constrained link between each other to be a serial data stream. When end device 720 and gateway 740 communicate a security message, such as Client Hello 711 or Server Hello 712, end device 720 and gateway 740 are configured to communicate the security message and other security messages with each other through the serial data stream using packet fragmentation over the constrained link, as illustrated in **Fig. 5****.**

In some embodiments, the serial data stream over the constrained link between end device 720 and gateway 740 may require varied bit rates or provide varied sizes of packet data units to convey the security message of the security protocol. End device 720 and gateway 740 may also be configured to communicate the security message and other security messages with each other through the serial data stream using dynamic fragmentation over the constrained link, as illustrated in **Fig. 5****.**

In some embodiments, end device 760 is also configured to send a server certificate of end device 760 to end device 720. If end device 760 requires a digital certificate for client authentication, end device 760 is further configured to send end device 720 a client certificate request that includes a plurality of types of certificates supported by end device 760 and distinguished names of acceptable certification authorities. DTLS client and server certificates may be, for example, 4 kilobytes (KBs). End devices 720 and 760 may be configured to send the DTLS client and server certificates in security messages by multiple packets using packet fragmentation. Alternatively, end devices 720 and 760 may be configured to send the DTLS client and server certificates in security messages by multiple packets using dynamic fragmentation with different data rates.

As shown in **Fig. 7****,** end device 760 is configured to send a Server Hello Done 713 to end device 720 through gateway 740. Server Hello Done 713 indicates an end of Server Hello 712 and other messages from end device 760.

After end device 720 receives Server Hello Done 713, end device 720 is configured to check whether parameters contained in Server Hello 712 are acceptable, and to verify end device 760 if end device 720 receives the server certificate of end device 760. When end device 720 accepts the parameters contained in Server Hello 712 and verifies end device 760 as a valid DTLS server, end device 720 may be configured to send a client certificate message to end device 760 if end device 720 receives the client certificate request.

After end devices 720 and 760 exchanges Client Hello 711 and Server Hello 712, end device 720 is configured to send a Client Key Exchange 714 to end device 760. The content of Client Key Exchange 714 depends on a public key algorithm chosen when end devices 720 and 760 exchange Client Hello 711 and Server Hello 712. For example, end device 720 may use either a premaster key encrypted by the Rivest-Shamir-Addleman (RSA) algorithm or the Diffie-Hellman (DH) algorithm for key agreement and authentication. In the example where end device 720 uses the RSA algorithm for server authentication and key exchange, end device 720 may be configured to generate a pre_master_secret, encrypt it under a server public key of end device 760, and send it in Client Key Exchange 714 to end device 760. End device 760 can use a private key to decrypt the pre_master_secret. End devices 720 and 760 may then convert the pre_master_secret into a master_secret.

As shown in **Fig. 7****,** end device 720 is then configured to send a Change Cipher Spec 715 to end device 760. Change Cipher Spec 715 notifies end device 760 transitions in ciphering strategies. For example, Change Cipher Spec 715 can notify end device 760 that subsequent messages or data are protected under the most recently negotiated Cipher Spec and keys.

End device 720 is also configured to send a Finished 716 immediately after sending Change Cipher Spec 715 in order to verify that the key exchange and authentication processes were successful. Finished 716 is the first protected packet with the most recently negotiated algorithms, keys, and secrets. Once end device 760 receives Finished 716, end device 760 is configured to verify that the contents of Finished 716 are correct.

As shown in **Fig. 7****,** end device 760 is configured to send a Change Cipher Spec 717 to end device 720 to notify end device 720 that subsequent messages or data are protected under the most recently negotiated Cipher Spec and keys.

End device 760 is also configured to send a Finished 718 immediately after sending Change Cipher Spec 716 to verify that the key exchange and authentication processes were successful. Finished 718 is the first protected packet from end device 760 to end device 720 using the most recently negotiated algorithms, keys, and secrets. Once end device 720 receives Finished 718, end device 720 is configured to verify that the contents of Finished 718 are correct.

Then, end device 720 is configured to communicate data with end device 760 via the DTLS protocol connection. For example, end device 720 may be configured to encrypt data by a session key calculated by itself and send an encrypted data 730 to end device 760. End device 760 is configured to decrypt data 730 by a session key calculated by itself and obtain the data sent from end device 720.

Alternatively, end device 760 may be configured to encrypt data by the session key and send an encrypted data 750 to end device 720. End device 720 is configured to decrypt data 750 by the session key and obtain the data sent from end device 760.

In some embodiments, one of end devices 720 and 760 may be configured to calculate a session key and send the session key to the other for data encryption and decryption over the DTLS protocol connection as described above.

In some embodiments, end devices 720 and 760 may be embodied as end devices 290 and 270 shown in **Fig. 2****.** Gateway 740 may be embodied as gateway 280 in **Fig. 2****.** Gateway 740 may connect with end device 760 through an IP link and with end device 720 through a serial data stream over a constrained link. The DTLS protocol connection between end devices 720 and 760 can be embodied as between end devices 290 and 270 in **Fig. 2****.**

In some embodiments, end devices 760 and 720 are configured to be a DTLS client and a DTLS server, and perform operations of end devices 720 and 760 in method 700 as described above in **Fig. 7****.**

End device 720 and end device 760 can be configured to communicate data with each other via the established DTLS protocol connection in one direction, e.g., from end device 720 to end device 760 or from end device 760 to end device 720, or in both two directions.

Since end device 720 and end device 760 communicate data via the DTLS protocol connection, data sent by one of end device 720 and end device 760 can only be decrypted by the other one. Accordingly, end device 720 has secure communication with end device 760, and vice versa.

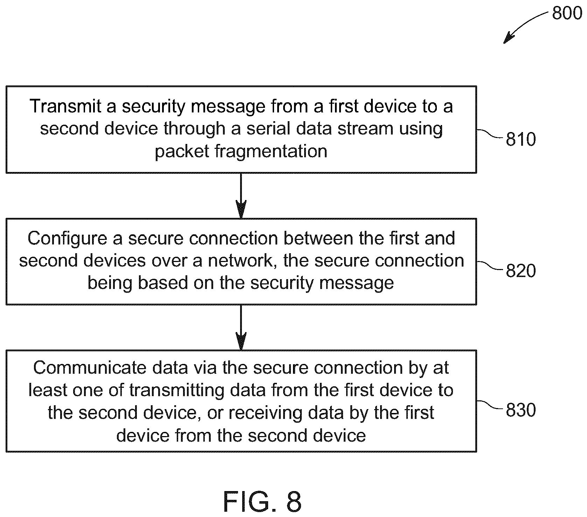

**Fig. 8** is a flow chart of an exemplary method 800 performed in an end device to provide end-to-end secure communications over a constrained network, consistent with embodiments of the present disclosure. Method 800 may be practiced by end device 121, 122, 123, 221, 222, 223, 270, 290, 300, 520, 620, 720, or 760. Method 800 includes transmitting a security message from a first device to a second device through a serial data stream using packet fragmentation (step 810), configuring a secure connection between the first and second devices over a network, the secure connection being based on the secure message (step 820) and communicating data via the security protocol connection by at least one of transmitting data from the first device to the second device, or receiving data by the first device from the second device (step 830).

Step 810 includes transmitting a security message from a first device to a second device through a serial data stream using packet fragmentation. For example, as shown in **Fig. 5****,** end device 520 sends security request 511 to server 560 through a serial data stream over a constrained link between end device 520 and gateway 540. As another example, server 560 sends end device 520 security response 531 by means of security response 532 through the serial data stream using packet fragmentation over the constrained link between end device 520 and gateway 540.

Step 820 includes configuring a secure connection between the first and second devices over a network, the secure connection being based on the security message. For example, as shown and described in **Fig. 5****,** end device 520 establishes a TLS protocol connection between end device 520 and server 560 over a constrained network. End device 520 configures the TLS protocol connection based on security request 511 and security response 532. The constrained network includes end device 520, gateway 540 and server 560. End device 520 and server 560 establish the TLS protocol connection over the constrained network.

Step 830 includes communicating data via the security protocol connection by at least one of transmitting data from the first device to the second device, or receiving data by the first device from the second device. For example, as shown in **Fig. 5****,** end device 520 communicates data via the TLS protocol connection with server 560 by transmitting data message 581, translated into data message 582 by gateway 540, to server 560. Alternatively, end device 520 can also communicate data via the TLS protocol connection with server 560 by receiving data message 592, translated from data message 591 by gateway 540, from server 560. End device 520 can also communicate data via the TLS protocol connection with server 560 by transmitting data to server 560 and receiving data from server 560, as data messages 581 and 592 described in **Fig. 5****.**

In some embodiments, the constrained network in method 800 includes a link constrained in at least one of a bitrate, a duty cycle, a delivery rate, an asymmetric link characteristic, a packet size, reachability over time, or a network service. For example, as illustrated in **Fig. 1****,** wireless loT network 100 includes the link constrained on the low achievable bit rate of 200 Kbps, the low duty cycle of one transmission per hour, the low delivery rate of 10 % successful packet transmission, the asymmetric link characteristic, the limited packet size of 1 Kb, the low reachability of one time per hour, and/or the limited network service of only unicast service.

Alternatively, the constrained network in method 800 includes, for example, end device 121 that is a constrained node due to one or more of the above constraints, as illustrated and described in **Fig. 1****.**

In some embodiments, the secure connection in method 800 is configured in accordance with a security protocol of a transport layer or an application layer. For example, end device 520 configures a secure connection in accordance with the TLS protocol between end device 520 and server 560. Alternatively, end device 520 can configure a secure connection in accordance with a DTLS protocol. In some embodiments, end device 520 can configure a secure connection in accordance with an application layer protocol, such as a Secure/Multi-purpose Internet Mail Extensions (S/MIME) protocol, an Open Pretty Good Privacy (OpenPGP) protocol, and a Secure HyperText Transfer Protocol (S/HTTP).

In some embodiments, step 810 includes transmitting the security message by transmitting the security message through the serial data stream using dynamic fragmentation in the network. For example, as described in **Fig. 5****,** end device 520 and gateway 540 are configured to dynamically fragment the security messages in varied sizes of packets of the Bluetooth Low Energy communication protocol and send to the other. In this manner, end device 520 transmits the security messages to gateway 540 through the serial data stream using dynamic fragmentation in the constrained network. The security messages include, for example, security request 511, client certificate message 551, key exchange message 571, and other security messages for TLS handshaking.

In some embodiments, step 810 includes transmitting the security message to the second device by using at least one of Bluetooth Low Energy, Bluetooth Classic, Zigbee, or Universal Asynchronous Receiver/Transmitter communication protocol. For example, as shown in **Fig. 1****,** end devices 121, 122, and 123 connects with gateway 140 through serial streams 131, 132, and 133 by using the Bluetooth Classic, Bluetooth Low Energy, and UART communication protocols, respectively. When end device 121, 122, or 123 communicates security messages with gateway 140 as illustrated in **Fig. 5****,** end device 121, 122, or 123 is configured to transmit the security messages to gateway 140 by using the Bluetooth Classic, Bluetooth Low Energy, or UART communication protocol.

In some embodiments, step 820 includes configuring the secure connection by negotiating an encryption algorithm, exchanging key information, verifying an identity of the second device in accordance with a trusted authentication authority, and calculating a session key based on the encryption algorithm and the key information. For example, as illustrated in **Fig. 5****,** end device 520 is configured to negotiate with server 560 the encryption algorithm that is used for data communication in the TLS protocol connection between end device 520 and server 560. End device 520 is also configured to exchange key information with server 560 by key exchange message 571 in the format of the serial data stream and key exchange message 572 in the format of the IP link. End device 520 is also configured to verify the identity of server 560 contained in security response 532 by comparing the identity of server 560 with those servers in the trusted authentication authority. End device 520 is further configured to calculate the session key based on the encryption information and the key information of server 560 as well as private and/or public key of end device 520.

In some embodiments, step 830 includes communicating data by encrypting data based on a session key and transmitting the encrypted data to the second device or by receiving data from the second device and decrypting the received data based on the session key. For example, as illustrated in **Fig. 5****,** end device 520 is configured to encrypt data by the session key and send a data message 581 to gateway 540. Alternatively, end device 520 is configured to decrypt data message 592 by the session key and obtain data transmitted by server 560.

Method 800 may also include checking a status of a session between the first and second devices, and updating the session if the status is determined to be recoverable at the second device. Step 830 includes communicating the data by exchanging the data based on a session key associated with the updated session.

For example, after end device 520 in **Fig. 5** exits from a sleep mode, end device 520 is configured to check a status of the session via the established TLS protocol connection with server 560. End device 520 is then configured to update the session if the status is determined to be recoverable at server 560. End device 520 may be configured to encrypt data by an updated session key and send a data message to gateway 540. Alternatively, end device 520 may be configured to decrypt a data message by the updated session key and obtain data transmitted by server 560.

In some embodiments, the second device in method 800 includes a server connected to a gateway via an Internet Protocol link. The first device comprises an end device communicating with the server via the secure connection. Step 830 includes communicating the data by exchanging the data between the end device and the server through the gateway. For example, as illustrated in **Fig. 1****,** server 160 is connected to gateway 140 via IP communication 150. End device 121 communicates with server 160 via security protocol connection 155. End device 121 and server 160 communicates the data by exchanging the data through gateway 140.

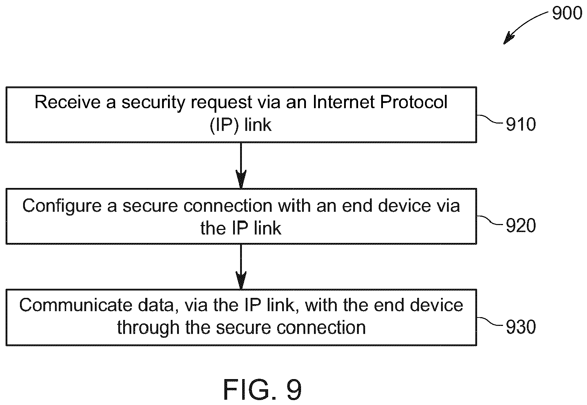

**Fig. 9** is a flow chart of another exemplary method 900 performed in a device on a network to provide end-to-end secure communications, consistent with embodiments of the present disclosure. Method 900 may be practiced by server 160 or 560. Method 900 includes receiving a security request via an IP link (step 910), configuring a secure connection with an end device via the IP link (step 920), and communicating data, via the IP link, with the end device through the secure connection (step 930).

Step 910 includes receiving a security request via an IP link. For example, as shown in **Fig. 5****,** server 560 is configured to receive security request 512 via the IP link between gateway 540 and server 560.

Step 920 includes configuring a secure connection with an end device via the IP link. For example, as illustrated in **Fig. 5****,** server 560 is configured to establish the TLS protocol connection with end device 520 via the IP link between gateway 540 and server 560.

Step 930 includes exchanging data, via the IP link, with the end device through the secure connection. For example, as illustrated in **Fig. 5****,** server 560 is configured to exchange data, via the IP link between gateway 540 and server 560, with end device 520 through the established TLS protocol connection.

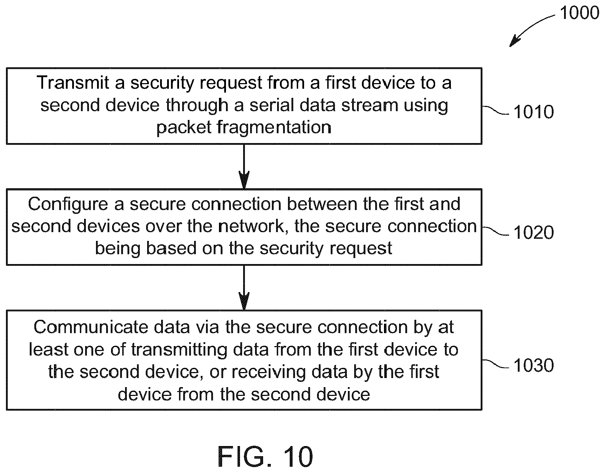

**Fig. 10** is a flow chart of an exemplary method 1000 performed in an end device to initiate end-to-end secure communications over a constrained network, consistent with embodiments of the present disclosure. Method 1000 may be practiced by end device 221, 222, 223, 270, 290, 300, 720, or 760. Method 1000 includes transmitting a security request from a first device to a second device through a serial data stream using packet fragmentation (step 1010), configuring a secure connection between the first and second devices over the network, the secure connection being based on the security request (step 1020), and communicating data via the secure connection by at least one of transmitting data from the first device to the second device, or receiving data by the first device from the second device (step 1030).

Step 1010 includes transmitting a security request from a first device to a second device through a serial data stream using packet fragmentation. For example, as shown in **Fig. 7****,** end device 720 is configured to send Client Hello 711 to end device 760 through the serial data stream using packet fragmentation over a constrained link between end device 720 and gateway 740.

Step 1020 includes configuring a secure connection between the first and second devices over the network, the secure connection being based on the security request. For example, as illustrated in **Fig. 7****,** end device 720 is configured to establish the DTLS protocol connection with end device 760 over the constrained network. End device 720 configures the DTLS protocol connection based on information in Client Hello 711.

Step 1030 includes communicating data via the secure connection by at least one of transmitting data from the first device to the second device, or receiving data by the first device from the second device. For example, as shown in **Fig. 7****,** end device 720 is configured to send data 730, over the constrained network, to end device 760 through the DTLS protocol connection. Alternatively, end device 720 can be configured to receive data 750, over the constrained network, from end device 760 through the DTLS protocol connection. In some embodiments, end device 720 can be configured to send and receive data to and from end device 760 via the DTLS protocol connection.

In some embodiments, the constrained network in method 1000 includes a link constrained in at least one of a bitrate, a duty cycle, a delivery rate, an asymmetric link characteristic, a packet size, reachability over time, or a network service, as described in method 800.

Alternatively, the constrained network in method 1000 includes, for example, end device 221 that is a constrained node due to one or more of the above constraints, as illustrated and described in **Fig. 2****.**

In some embodiments, the secure connection in method 1000 is configured in accordance with a security protocol of a transport layer or an application layer. For example, end device 720 configures a secure connection in accordance with the DTLS protocol between end device 720 and end device 760. Alternatively, end device 720 can configure a secure connection in accordance with a TLS protocol. In some embodiments, end device 720 can configure a secure connection in accordance with an application layer protocol, such as a Secure/Multi-purpose Internet Mail Extensions (S/MIME) protocol, an Open Pretty Good Privacy (OpenPGP) protocol, and a Secure HyperText Transfer Protocol (S/HTTP).

In some embodiments, step 1010 includes sending a security request by sending the security request through the serial data stream using dynamic fragmentation in the constrained network, as described in method 800 or end device 720 in **Fig. 7****.**

In some embodiments, step 1010 includes sending a security request by sending the security request using at least one of Bluetooth Low Energy, Bluetooth Classic, Zigbee, or Universal Asynchronous Receiver/Transmitter communication protocol, as illustrated in method 800.

In some embodiments, step 1020 includes configuring the secure connection by negotiating an encryption algorithm, exchanging key information, verifying an identity of the second device in accordance with a trusted authentication authority, and calculating a session key based on the encryption algorithm and the key information, as illustrated in step 820 of method 800.

In some embodiments, step 1030 includes communicating data by encrypting data based on a session key and transmitting the encrypted data to the second device or by receiving data from the second device and decrypting the received data based on the session key, as described in step 830 of method 800.

Method 1000 may also include checking a status of a session between the first and second devices, and updating the session if the status is determined to be recoverable at the second device, as described in method 800. Step 1030 includes exchanging the data based on a session key associated with the updated session.

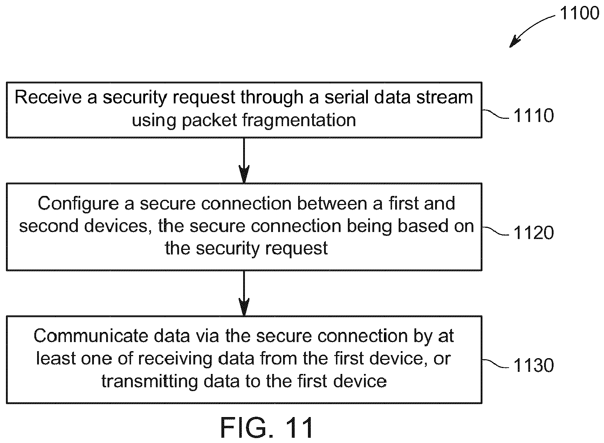

**Fig. 11** is a flow chart of an exemplary method 1100 performed in an end device to receive a request for end-to-end secure communications over a constrained network, consistent with embodiments of the present disclosure. Method 1100 may be practiced by end device 221, 222, 223, 270, 290, 300, 720, or 760. Method 1100 includes receiving a security request through a serial data stream using packet fragmentation(step 1110), configuring a secure connection between a first and second devices, the secure connection being based on the security request (step 1120), and communicating data via the secure connection by at least one of receiving data from the first device, or transmitting data to the first device (step 1130).

Step 1110 includes receiving a security request through a serial data stream using packet fragmentation. For example, as shown in **Fig. 7****,** end device 760 receives Client Hello 711 from end device 720 through the serial data stream over the constrained link between end device 720 and gateway 740 and/or between end device 760 and gateway 740. Client Hello 711 may be transmitted through the constrained link using packet fragmentation, as described in **Fig. 7****.**

Step 1120 includes configuring a secure connection between a first and second devices, the secure connection being based on the security request. For example, as illustrated in **Fig. 7****,** end device 760 is configured to establish the DTLS protocol connection with end device 720 over the constrained network. End device 760 configures the DTLS protocol connection based on Client Hello 711.

Step 1130 includes communicating data via the secure connection by at least one of receiving data from the first device, or transmitting data to the first device. For example, as shown in **Fig. 7****,** end device 760 is configured to receive data 730, over the constrained network, from end device 720 via the DTLS protocol connection. Alternatively, end device 760 can be configured to send data 750, over the constrained network, to end device 720 via the DTLS protocol connection. In some embodiments, end device 760 can be configured to receive and send data from and to end device 720 via the DTLS protocol connection.

In some embodiments, the constrained network in method 1100 includes a link constrained in at least one of a bitrate, a duty cycle, a delivery rate, an asymmetric link characteristic, a packet size, reachability over time, or a network service, as described in method 800.

Alternatively, the constrained network in method 1100 includes, for example, end device 221 that is a constrained node due to one or more of the above constraints, as illustrated and described in **Fig. 2****.**

In some embodiments, the secure connection in method 1100 is configured in accordance with a security protocol of a transport layer or an application layer. For example, end device 760 configures a secure connection in accordance with the DTLS protocol between end device 760 and end device 720. Alternatively, end device 760 can configure a secure connection in accordance with a TLS protocol. In some embodiments, end device 760 can configure a secure connection in accordance with an application layer protocol, such as a Secure/Multi-purpose Internet Mail Extensions (S/MIME) protocol, an Open Pretty Good Privacy (OpenPGP) protocol, and a Secure HyperText Transfer Protocol (S/HTTP).

In some embodiments, step 1110 includes receiving a security request by receiving the security request through the serial data stream using dynamic fragmentation in the constrained network, as illustrated in method 800 or end device 760 in **Fig. 7****.**

In some embodiments, step 1110 includes receiving a security request by receiving the security request using at least one of Bluetooth Low Energy, Bluetooth Classic, Zigbee, or Universal Asynchronous Receiver/Transmitter communication protocol, as illustrated in method 800.

In some embodiments, step 1120 includes configuring the secure connection by negotiating an encryption algorithm, exchanging key information, verifying an identity of the first device in accordance with a trusted authentication authority, and calculating a session key based on the encryption algorithm and the key information, as described in step 820 of method 800 or end device 760 in **Fig. 7****.**

In some embodiments, step 1130 includes communicating data by encrypting data based on a session key and transmitting the encrypted data to the first device or by receiving data from the first device and decrypting the received data based on the session key, as described in step 830 of method 800 or end device 760 in **Fig. 7****.**

Method 1100 may also include checking a status of a session between the first and second devices, and updating the session if the status is determined to be recoverable at the second device, as described in method 800 or end device 760 in **Fig. 7****.** Step 1130 includes exchanging the data based on a session key associated with the updated session.

In some embodiments, the constrained link in method 1000 or 1100 is a first constrained link. The first device comprises a first end device connected to a first gateway through the serial data stream over the first constrained link. The second device includes a second end device connected to a second gateway over a second constrained link. The first gateway and the second gateway are connected via an Internet Protocol link. The first end device and the second end device communicate with each other via the security protocol connection through the first gateway and the second gateway. Step 1030 or 1130 includes exchanging the data via the secure connection between the first end device and the second end device through the first gateway and the second gateway.

Moreover, the first end device includes a client in the secure connection. The second end device includes a server in the secure connection.

For example, as shown in **Fig. 2****,** serial stream 231 can be the first constrained link. End device 221 is connected to gateway 240 through serial stream 231. End device 290 is connected to gateway 280 over constrained serial link 239. Gateway 240 and gateway 280 are connected via IP communication 250, a link of Internet 260, and IP communication 251. End device 221 and end device 290 communicate with each other via security protocol connection 255 through gateway 240 and gateway 280. End device 221 and end device 290 exchange data via security protocol connection 255 through gateway 240 and gateway 280.

Moreover, end device 221 can be configured to be a client in security protocol connection 255. End device 290 can be configured to be a server in security protocol connection 255. For example, end devices 221 and 290 are configured to be a TLS client and a TLS server in a TLS protocol connection. As another example, end devices 221 and 290 are configured to be a DTLS client and a DTLS server in a DTLS protocol connection.

In some embodiments, end device 221 can be configured to be a server in security protocol connection 255. End device 290 can be configured to be a client in security protocol connection 255. For example, end devices 221 and 290 are configured to be a TLS server and a TLS client in a TLS protocol connection. As another example, end devices 221 and 290 are configured to be a DTLS server and a DTLS client in a DTLS protocol connection.

In some embodiments, method 1000 or 1100 includes connecting a first end device to a gateway over the constrained link. The first device comprises the first end device. The second device includes a second end device connected to the gateway via an Internet Protocol link. The first end device and the second end device communicate with each other via the secure connection through the gateway. Step 1030 or 1130 includes exchanging the data via the secure connection between the first end device and the second end device through the gateway.

Moreover, the first end device includes one of a client or a server in the secure connection. When the first end device includes a client, the second end device includes a server. When the first device includes the server, the second end device includes the client.

For example, as shown in **Fig. 2****,** end device 290 is configured to connect to gateway 280 over constrained serial link 239. End device 270 is configured to connect to gateway 280 via IP communication 252, a link of Internet 260, and IP communication 251. End device 290 and end device 270 communicate with each other via security protocol connection 256 through gateway 280. End device 290 and end device 270 are configured to exchange data via security protocol connection 256 through gateway 280.

Moreover, end device 290 can be configured to be one of a client or a server in security protocol connection 256. When end device 290 is configured to be a TLS client, end device 270 is configured to be a TLS server. When end device 290 is configured to be the TLS server, end device 270 is configured to be the TLS client. When end device 290 is configured to be a DTLS client, end device 270 is configured to be the DTLS server. When end device 290 is configured to be the DTLS server, end device 270 is configured to be the DTLS client.

Another aspect of the disclosure is directed to a non-transitory computer-readable medium storing instructions which, when executed, cause one or more processors to perform the methods, as discussed above. For example, instructions may be stored on a non-transitory computer-readable medium included in memory 380 of end device 300 for execution by controller 360, or in memory 480 of server 400 for execution by processor 460. The computer-readable medium may include volatile or non-volatile, magnetic, semiconductor, tape, optical, removable, non-removable, or other types of computer-readable medium or computer-readable storage devices. For example, the computer-readable medium may be the storage device or the memory module having the computer instructions stored thereon, as disclosed. In some embodiments, the computer-readable medium may be a disc or a flash drive having the computer instructions stored thereon.

It will be appreciated that the present disclosure is not limited to the exact construction that has been described above and illustrated in the accompanying drawings, and that various modifications and changes can be made without departing from the scope thereof. It is intended that the scope of the application should only be limited by the appended claims.

## Claims

1. A method for secure communication between first and second devices over a network, the method comprising:
transmitting a security message from the first device to the second device through a serial data stream using packet fragmentation;
configuring a secure connection between the first and second devices over the network, the secure connection being based on the security message; and
communicating data via the secure connection by at least one of:
transmitting data from the first device to the second device; or
receiving data by the first device from the second device.

2. The method of claim 1, wherein the network comprises a constrained node and/or comprises a link constrained in at least one of:
a bitrate,
a duty cycle,
a delivery rate,
an asymmetric link characteristic,
a packet size,
reachability over time, or
a network service.

3. The method of claim 1 or claim 2, wherein the secure connection is configured in accordance with a security protocol of at least one of a transport layer or an application layer.

4. The method of any one of the preceding claims, wherein communicating data comprises at least one of:
encrypting data based on a session key and transmitting the encrypted data from the first device to the second device; or
receiving data by the first device from the second device and decrypting the received data based on the session key.

5. The method of any one of the preceding claims, comprising:
checking a status of a session between the first and second devices; and
updating the session if the status is determined to be recoverable at the second device;
wherein communicating the data comprises exchanging the data based on a session key associated with the updated session.

6. The method of any one of the preceding claims, wherein:
the second device comprises a server connected to a gateway via an Internet Protocol link;
the first device comprises an end device communicating with the server via the secure connection; and
communicating the data comprises exchanging the data between the end device and the server through the gateway.

7. The method of any one of claims 1 to 5, wherein:
the network comprises a first constrained link between the first device and a first gateway;
the first device comprises a first end device connected to the first gateway through the serial data stream over the first constrained link;
the second device comprises a second end device connected to a second gateway over a second constrained link;
the first gateway and the second gateway are connected with each other via an Internet Protocol link;
the first end device and the second end device communicate with each other via the secure connection through the first gateway and the second gateway; and
communicating the data comprises exchanging the data via the secure connection between the first end device and the second end device through the first gateway and the second gateway,
optionally wherein:
the first end device comprises a client in the secure connection; and
the second end device comprises a server in the secure connection.

8. The method of any one of claims 1 to 5, comprising connecting a first end device to a gateway over a constrained link, wherein:
the first device comprises the first end device;
the second device comprises a second end device connected to the gateway via an Internet Protocol link;
the first end device and the second end device communicate with each other via the secure connection through the gateway; and
communicating the data comprises exchanging the data via the secure connection between the first end device and the second end device through the gateway.
optionally wherein:
the first end device comprises one of a client or a server in the secure connection;
when the first end device comprises a client, the second end device comprises a server; or
when the first end device comprises the server, the second end device comprises the client.

9. An end device for secure communication with a remote device over a network, the end device comprising:
at least one memory for storing instructions; and
at least one controller configured to execute the instructions to perform operations comprising:
transmitting a security message to the remote device through a serial data stream using packet fragmentation;
configuring a secure connection with the remote device over the network, the secure connection being based on the security message; and
communicating data via the secure connection by at least one of:
transmitting data to the remote device; or
receiving data from the remote device.

10. The end device of claim 9, wherein the operations comprise connecting a first end device to a gateway over a constrained link, wherein:
the end device comprises a first end device;
the remote device comprises a second end device connected to the gateway via an Internet Protocol link;
the first end device and the second end device communicate with each other via the secure connection through the gateway; and
communicating the data comprises exchanging the data via the secure connection between the first end device and the second end device through the gateway.

11. The method of any one of claims 1 to 8 or the end device of any one of claims 9 to 10, wherein configuring the secure connection comprises:
negotiating an encryption algorithm;
exchanging key information;
verifying an identity of the remote device or second device in accordance with a trusted authentication authority; and
calculating a session key based on the encryption algorithm and the key information.

12. The method of any one of claims 1 to 8 or the end device of any one of claims 9 to 11, wherein transmitting the security message comprises transmitting the security message through the serial data stream using dynamic fragmentation in the network.

13. The end device of any one of claims 9 to 12, wherein:
the remote device comprises a server connected to a gateway via an Internet Protocol link;
the end device communicates with the server via the secure connection; and
communicating the data comprises exchanging the data between the end device and the server through the gateway.

14. The end device of any one of claims 9 to 12, wherein:
the network comprises a first constrained link between the end device and a first gateway;
the end device comprises a first end device connected to the first gateway through the serial data stream over the first constrained link;
the remote device comprises a second end device connected to a second gateway over a second constrained link;
the first gateway and the second gateway are connected with each other via an Internet Protocol link;
the first end device and the second end device communicate with each other via the secure connection through the first gateway and the second gateway; and
communicating the data comprises exchanging the data via the secure connection between the first end device and the second end device through the first gateway and the second gateway.

15. A non-transitory computer-readable medium for storing instructions which, when executed, cause a controller to perform operations for secure communication between first and second devices over a network, the operations comprising:
transmitting a security message from the first device to the second device through a serial data stream using packet fragmentation;
configuring a secure connection between the first and second devices over the network, the secure communication being based on the security message; and
communicating data via the secure connection by at least one of:
transmitting data from the first device to the second device; or
receiving data by the first device from the second device.
